# EUROPEAN PATENT APPLICATION

(11) **EP 1 296 269 A1**
(43) Date of publication of application: **26.03.2003**
(21) Application number: 02256566.7
(22) Date of filing: 20.09.2002
(51) Int. Cl.: G06F 17/60

(54) **Method and apparatus for configuring a system**

(30) Priority: 21.09.2001 GB 0122884
(71) Applicant: Hewlett-Packard Company, Palo Alto, CA 94304 (US)
(72) Inventor: Salle, Mathias Jean Rene, Palo Alto, CA 94306 (US)
(74) Representative: Lawrence, Richard Anthony

(57) **Abstract**

The invention relates to the automatic configuring of systems. In an embodiment of the invention, there is provided: user equipment (100), comprising the system (110) which it is desired to configure and a system monitoring and configuration module (120); Service provider equipment (200); and a contract monitor (300). The contract monitor (300) includes a machine readable contract (310) between the user and the service provider, defining the obligations of each. The contract is effectively compared with the state of the system (100) and, if the system configuration is not as it should be remedial action is taken automatically.

## Description

The invention relates to a method and an apparatus for configuring a system.

Over the years, the configuration of electronic systems has increased in complexity. In particular, systems can be dynamically tailored to meet the requirements of customers by allocation of extra processors, more memory etc.

Unfortunately, whilst system configurations have become more flexible (and hence complex), the actual establishment and setting up of such configurations is not highly automated and is independent of any contract underlying such configurations.

It is an aim of preferred embodiments of the present invention to provide a method of system configuration in which there is a high degree of automation and to link a contract defining a desired system configuration and set-up of the system configuration itself.

According to a first aspect of the invention, there is provided a method for configuring a system between contracting parties, the method comprising:(1) establishing a contract between a user and a provider in an electronic document;(2) defining within the contract aspects related to the configuration of a system to be established by the provider for the user; (3) automatically configuring the system in accordance with the contract; and(4) providing on-going monitoring of the system and the contract to ensure that compliance is maintained between the configuration of the system and a current or updated state of the contract.

Preferably, step (1) comprises agreeing between the user and the provider a designated machine readable format for an electronic document in which user requirements and user obligations corresponding to those requirements are to be set out.

Step (2) suitably comprises specifying requirements of the system to be configured in the electronic document and specifying the obligations that the user and the provider are obliged to fulfil.

Step (2) may comprise a further step of specifying optional requirements relating to system parameters and the obligations required to be met to validate the provision of such optional requirements.

Suitably, step (3) comprises the sub-steps of:
(3)(a) checking the electronic document to determine if any obligations on behalf of the contracting parties have been fulfilled; and
(3)(b) implementing the configuration of the system in accordance with the fulfilled obligations.

Here, step (3) (b) may comprise the sub-steps of:
(3) (b) (i) automatically ordering the provision of any necessary elements for supply for the required system;
(3) (b) (ii) delivery of the elements to a required location; and
(3) (b) (iii) set-up of the elements in accordance with the contract.

Preferably, step (4) comprises the sub-steps of:(4)(a) detecting an update change in the contract held in the electronic document and checking the electronic document to determine what change has occurred; and(4)(b) where it is determined that the change in the contract requires a change to be made to the configuration of the system, then configuring the system in accordance with the required system configuration change. The method may further comprise the step (4)(c) of monitoring the system to ensure that the system configuration is in compliance with the state of the contract.

Step (4) (b) may comprise the sub-steps of: (4) (b) (i) automatically ordering the provision of any necessary elements for implementing the required change in system configuration;(4)(b)(ii) delivery of the elements to a required location; and(4)(b)(iii) set-up of the elements in accordance with the updated contract.

In some circumstances, the systems to be configured will be physically located at a users premises, whilst in others it may be located elsewhere. For instance, the system may be at the providers premises, and the user may be desiring to configure a set of web servers from a pool of available servers at the providers premises.

Preferably, the provider is alerted whenever it is detected that there is an imbalance between user requirements and user obligations. Similarly, the user may be alerted whenever it is detected that there is an imbalance between provider requirements and obligations.

If a user obligation is detected as being fulfilled, whilst the user requirement is not fulfilled, the provider is preferably prompted to fulfil the requirement. Similarly, if a provider obligation is detected as being fulfilled, whilst the provider requirement is not fulfilled, the user may be prompted to fulfil the requirement.

If a user requirement is detected as being fulfilled, whilst a corresponding user obligation is unfulfilled, the user is preferably prompted to fulfil such obligation. Similarly, if a provider requirement is detected as being fulfilled, whilst a corresponding provider obligation is unfulfilled, the provider may be prompted to fulfil such obligation.

If the user or the provider fails to respond to a prompt to fulfil an obligation, then one or more sanctions provided for in the contract may be applied.

According to a second aspect of the invention, there is provided an apparatus for configuring a system, the apparatus comprising:
a contract monitor; and
a system monitoring and configuration module, wherein the contract monitor is arranged to monitor a contract established between a user and a service provider, the contract defining aspects related to the configuration of the system concerning requirements of the system and obligations of the user and/or service provider needed to be met before the requirements may be fulfilled to determine a required system configuration and to communicate configuration information to the system monitoring and configuration module to enable configuration of the system in accordance with the contract.

In another aspect, there is provided an apparatus for configuring a system, the apparatus comprising: a contract monitor comprising a database in which a contract established between a user and a service provider is storable, a controller and a communications interface, wherein the contract defines an agreed current state of a user system to be provided by the service provider; and a system monitoring and configuration module installed at the location of the user; wherein, the system monitoring and configuration module is arranged to: (I) monitor the state of a system installed at the user location and report to the contract monitor with the state of the system and (II) receive configuration information from the contract monitor and configure the system accordingly and, wherein, the contract monitor is arranged to: (a) receive information concerning the state of the system from the system monitoring and configuration module; (b) monitor the state of the contract; and (c) compare the system state information to the contract state information and detect any imbalance therebetween.

The system monitoring and configuration module may comprise a control module and sensors, wherein the sensors are arranged to sense information relevant to the current state of the system and, under control of the control module, the system state information is transmitted to the contract monitor.

The contract monitor may be arranged following comparison stage (c) to alert one or more of the contracting parties to any imbalance found. Preferably, following such alert the service provider corrects such imbalance.

The system monitoring and configuration module is suitably arranged to monitor the system and report back to the contract monitor.

Preferably, the contract is established between the user and the provider in a designated format for an electronic document.

The contract monitor may comprise a database for storing the contract, a controller for accessing the database and comparing data from the system monitoring and configuration module with requirements and obligations defined in the contract and alerting the provider of any discrepancy. The contract monitor may further comprise a communications interface for communication between it and user and provider equipments.

The contract may comprise optional requirements relating to system parameters and the obligations the user is required to meet to validate the provision of such optional requirements.

At a location of the provider equipment a customer maintenance module is preferably provided which is arranged for: automatically ordering the provision of any necessary elements for the required system; and delivery of the elements to a required location.

The system monitoring and configuration module is preferably arranged at the required location to set-up the elements in accordance with the contract.

The provider may be alerted whenever it is detected that there is an imbalance between user requirements and user obligations.

Preferably, if a user obligation is detected as being fulfilled, whilst the user requirement is not fulfilled, the provider is prompted to fulfil the requirement.

Preferably, if a user requirement is detected as being fulfilled, whilst a corresponding user obligation is unfulfilled, the user is prompted to fulfil such obligation.

For a better understanding of the invention and to show how an embodiment of the invention may be brought into effect, a preferred embodiment of the invention will now be described, by way of example only, with reference to the accompanying drawings, in which:
Figure 1 illustrates schematically an apparatus for the automatic configuration of a system 110 according to the state of a contract between a users company 100 and a service providers company 200;
Figure 2 is a flow diagram illustrating a method in accordance with an embodiment of the invention; and
Figure 3 is a sub-flow diagram expanding on the method step 204 of figure 2.

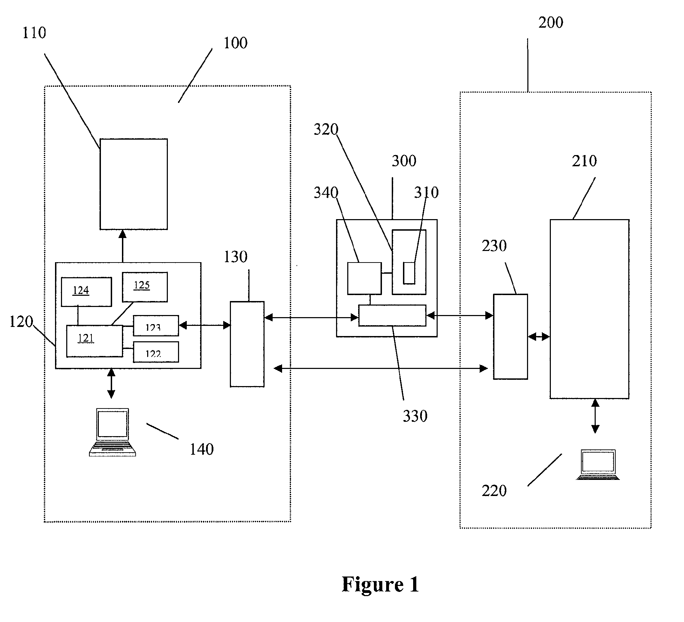

Referring to figure 1 there is shown a user company equipment 100, a service provider company equipment 200 and a contract monitor 300.

The user company equipment 100 includes a user system 110 that is supplied and maintained by the service provider company, further, the user company equipment 100 includes a system monitoring and configuration module 120, a communications interface 130 and a user terminal 140.

The system monitoring and configuration module 120 comprises the elements of a controller 121, storage 122, communications facilities 123, sensors 124 appropriate to the system to be monitored and any drivers/devices 125 necessary for the desired system configuration to be implemented in as automatic a fashion as possible.

The service provider company equipment 200 includes a customer maintenance module 210, a communications interface 230 and a user terminal 220.

The contract monitor 300 retains a copy of an agreement 310 between the user and the service provider in a form in which obligations of user and service provider are clearly set out and accessible to all parties. The agreement is held on a database 320. The contract monitor 300 includes a communications interface 330 and a controller 340.

Use of the apparatus of figure 1 will now be described.

In a contract setting up phase, there is established a contract between user and provider. This comprises agreeing between the user and the provider a designated format for an electronic document (which will become contract 310) in which user requirements and user and provider obligations corresponding to those requirements are to be set out.

Contract negotiation may be achieved using a set of communication media in an internet based environment, the media permitting the user and provider to define the terms and conditions (requirements and obligations).

Once the user requirements are defined and the obligations to be met for fulfilment of those requirements are also defined, the contract document may be lodged at the contract monitor 300 in the database 320.

The requirements of the user correspond to the configuration of the system 110 to be established by the provider for the user and at the point of establishment of the contract, the user requirements will not have been fulfilled, whilst some or all of the user obligations may have been met. The contract 310 also defines any provider requirements and obligations. The controller 340 is arranged to detect any disparity between obligations/requirements while they exists in the contract and will via communications interfaces 330, 230 inform the service provider and via interfaces 330,130 inform the user of this.

In response to a prompt from the contract monitor 340 that there is a disparity between an obligation of the user having been fulfilled and a matching requirement of that user not having been met, the service provider dispatches any service personnel needed to work at the user company 100 and/or fulfils any requirements that can be met remotely (for instance by transmitting self installing software via communications interfaces 330,130).

At the user end, the system monitoring and configuration module 120 performs any automatic configuration that can be done (such as the loading and configuration of software sent directly from the service provider company equipment 200 to the user company 100) and monitors the system via any appropriate sensors to check for fulfilment of the particular contractual requirements. As requirements are met, the system monitoring and configuration module 120 detects this fact and signals back to the contract monitor accordingly and the service provider company 200. This process continues until all valid requirements (i.e. those for which the corresponding obligation has been fulfilled) have been registered as met.

At all times the state of the user system 100 in terms of the service providers obligations to the user to maintain that system to a particular standard is defined by the contract 310 stored on database 320 of the contract monitor 300.

Periodically, the controller 340 of contract monitor 300 tracks the state of the contract 310 and, in particular, looks for compliance between valid user requests and the actual state of the user system 100. By a valid user request it is meant that a condition in contract 310 has been fully met in terms of obligations on the users behalf.

In checking for compliance between the valid users requests and the state of the system 110, the controller 340 requests the state of the system 110 via communications interfaces 330,130 and the user system monitoring and configuration module 120. Information regarding the state of system 110 is thereby fed to the contract monitor 300 and checked for the expected compliance. If compliance is found between all contract terms and the state of the user system 110, then all is well.

If, on the other hand, compliance is not found, the controller 340 by means of communications interfaces 330,230 informs the customer maintenance module 210 of the service provider of the discrepancy and may further inform the user of the discrepancy via interfaces 330,130. The customer maintenance module 210 checks whether the discrepancy signalled by the contract monitor appears to exist and, if it does, requests appropriate action of the service provider by sending the service provider notification of the unfulfilled provision. If however the apparent discrepancy should not exist - for instance the discrepancy shows a shortfall of printers supplied to the user, but service provider records indicate that all printers ordered by the user have indeed been supplied - then an email query is sent from communications interface 230 to interface 130 for display on the user terminal 140.

In the case where the service provider is alerted to a genuine discrepancy between contract 310 and services supplied to the user, the customer maintenance module 210 takes the necessary action. Such action may be an automated action needing no human intervention (such as the transfer and installation of software) or may send instructions to a service operative to visit the user and take action (such as installing a new printer).

Sanctions may be provided for in the contract 310. For instance, in the event that a discrepancy exists for more than a predetermined time then a sanction may be applied to the contracting party who is in default. Such a sanction may comprise a financial penalty for example.

Providing for automatic contract monitoring and ensuring compliance with contract terms in the manner described above allows the facility for the contract to be varied. For instance, optional extras may be allowed for in the contract 310 and the user may request any of these at any time via user terminal 140, system monitoring and configuration module 120 and communications interface 130. Such a request may simply involve ticking an option on a user copy of the contract, signalling acceptance of the terms required of the user for implementation of the option (e.g. payment authorisation) and uploading the revised contract 310 to the contract monitor 320.

Upon receipt of the updated user contract 310 via interface 330, the controller 340 compares the replacement with the original contract and will notice and signal any discrepancy to the service provider company as an unfulfilled provision for attending to by the service provider in the manner described previously.

In a further type of operation, it may be that the user requirements diminish, by reason of a fall in customer base for instance. In such a case, the user may decide upon reviewing their contract that they require less equipment or less frequent service intervals. If their contract 310 allows for such changes, then a replacement contract may be sent to the contract monitor 300. Here, as before, the discrepancy between new contract and old contract will be noticed and the service provider alerted automatically. In the case where less frequent servicing is required, the customer maintenance module 210 (which contains servicing schedules and initiates the call out of service personnel) may automatically amend the service schedules and amend billing information accordingly downward. Further, if the change means less equipment is required the module 210 may diary for a service engineer to pick up the excess equipment at the next visit.

In relation to the above, if the user tries to cheat the system by downsizing apparent requirements whilst retaining use of the "no longer required " equipment, the system monitoring and configuration module 120 will detect such unauthorised use and report back to the customer maintenance module 210so that the user may be billed accordingly.

From the above description, it will be evident to the man skilled in the art that the system and teachings of the present invention provide many advantages to the user and the service provider.

In prior conventional systems, whenever a user required an update to their system, the user would need to physically contact the service provider company 200 and ask for a call out, arrange details, raise invoices for the work etc., often with there being little in terms of checking that only those items specifically requested have been attended to.

In the arrangements of the invention, the user company is very much in control and procedures are transparent. Changes to requirements can be carried out at contract level without needing to separately contact the service provider and an authentic text of the agreed contract is always available for consultation or amendment (in pre-agreed ways) at the contract monitor. Furthermore, the provision of system monitoring and configuration by means of the system monitoring and configuration module 120 ensures that even though a user may be unaware of a discrepancy between actual system performance and agreed performance levels, such a discrepancy can automatically be signalled to the service company and remedial action taken.

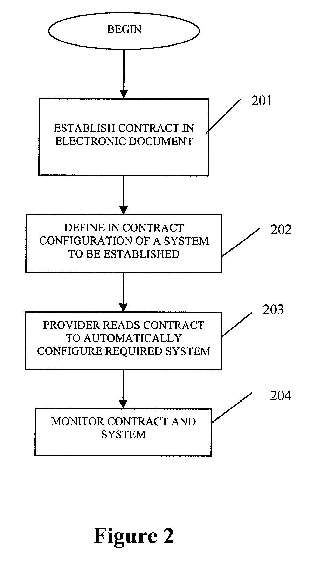

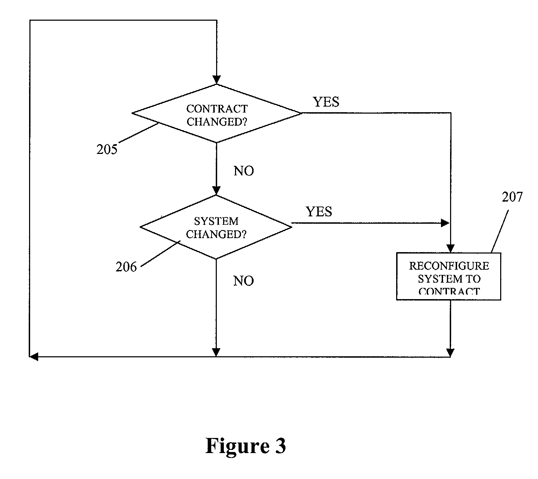

The methods described above in detail may be conveniently summarised by reference to the method steps shown in Figures 2 and 3 of the accompanying drawings:
STEP 201: A contract is established in an electronic document;
STEP 202: In the contract the configuration of a system to be established is defined;
STEP 203: The service provider reads the contract to automatically configure the system according to the contract;
STEP 204: The contact and system are thereafter monitored to maintain compliance between the two.

In Figure 3, step 204 of the figure 2 method is expanded on as follows:

In step 205 it is checked whether the contract has been altered. If so, then the system is reconfigured in step 207 to comply with the altered contract.

If in step 205 no alteration in the contract is detected, then the state of the system is checked in step 206 to see if that has changed. If so, then in step 207, the system is changed to comply with the contract.

If in step 206, the system is unchanged then the method loops back to the contract monitoring step 205.

It will be appreciated by the man skilled in the art that many variations to the embodiments of the invention may be made and still fall within the scope of this invention

For instance, the contract monitor is depicted and described throughout as being a separate entity to the user and service provider companies. Whilst such a separate existence may be desirable with contract affairs being dealt with by a trusted third party, the contract monitor functions could be assumed within the user company or the service provider company or distributed between the two. Alternatively, contract monitor functions may be duplicated by the user and service provider companies to ensure agreement and integrity of systems.

Whilst in the discussion above, it has been assumed that the system to be configured is at a users location, this need not be the case. For instance, in many cases the system may be at the provider location and may constitute processing resources such as one or more servers of a pool of servers. In such cases monitoring and configuration are carried out in a convenient in-house fashion at the providers premises.

In the above, it is to be understood that system configuration relates to both hardware and software aspects of systems and includes any type of action which may be carried out as part of such configuration. Such actions include, but are not limited to deployment, initialisation and execution.

Further, it will be realised that where appropriate hardware functions may be implemented in software and vice versa and that steps which have been described as automatic may include or be replaced by human monitoring/intervention.

It will also be appreciated that where specific signalling means such as email have been mentioned, other signalling means may alternatively be used where appropriate.

## Claims

1. A method for configuring a system between contracting parties, the method comprising:
(1) establishing a contract between a user and a provider in an electronic document;
(2) defining within the contract aspects related to the configuration of a system to be established by the provider for the user;
(3) automatically configuring the system in accordance with the contract; and
(4) providing on-going monitoring of the system and the contract to ensure that compliance is maintained between the configuration of the system and a current or updated state of the contract.

2. The method of claim 1, wherein step (1) comprises agreeing between the user and the provider a designated machine readable format for an electronic document in which user requirements and user obligations corresponding to those requirements are to be set out.

3. The method of claim 2, wherein step (2) comprises specifying requirements of the system to be configured in the electronic document and specifying the obligations that the user and/or the provider are obliged to fulfil.

4. The method of claim 3, wherein step (2) comprises a further step of specifying optional requirements relating to system parameters and the obligations required to be met to validate the provision of such optional requirements.

5. The method of claim 1, wherein step (3) comprises the sub-steps of:
(3) (a) checking the electronic document to determine what obligations on behalf of the contracting parties have been fulfilled; and
(3) (b) implementing the configuration of the system in accordance with the fulfilled obligations.

6. The method of claim 5, wherein step (3)(b) comprises the sub-steps of:
(3) (b) (i) automatically ordering the provision of any necessary elements for supply for the required system;
(3) (b) (ii) delivery of the elements to a required location; and
(3) (b) (iii) set-up of the elements in accordance with the contract.

7. The method of claim 1, wherein step (4) comprises the sub-steps of:
(4) (a) detecting an update change in the contract held in the electronic document and checking the electronic document to determine what change has occurred; and
(4) (b) where it is determined that the change in the contract requires a change to be made to the configuration of the system, then configuring the system in accordance with the required system configuration change.

8. The method of claim 7, further comprising the step (4) (c) of monitoring the system to ensure that the system configuration is in compliance with the state of the contract.

9. The method of claim 7, wherein step (4)(b) comprises the sub-steps of:
(4) (b) (i) automatically ordering the provision of any necessary elements for implementing the required change in system configuration;
(4) (b) (ii) delivery of the elements to a required location; and
(4) (b) (iii) set-up of the elements in accordance with the updated contract.

10. The method of claim 3, wherein the one or more of the contracting parties is alerted whenever it is detected in step (3) or (4) that there is an imbalance between requirements and obligations.

11. The method of claim 10, wherein if an obligation is detected as being fulfilled, whilst the corresponding requirement is not fulfilled, then the appropriate contracting party is prompted to fulfil the requirement.

12. The method of claim 10, wherein if a requirement is detected as being fulfilled, whilst a corresponding obligation is unfulfilled, the appropriate contracting party is prompted to fulfil such obligation.

13. Apparatus for configuring a system, the apparatus comprising:
a contract monitor (300) comprising a database (320) in which a contract established between a user and a service provider is storable, a controller (340) and a communications interface (330), wherein the contract defines an agreed current state of a user system to be provided by the service provider; and
a system monitoring and configuration module (120) installed at the location of the user;
wherein, the system monitoring and configuration module (120) is arranged to: (I) monitor the state of a system (110) installed at the user location and report to the contract monitor (300) with the state of the system (110) and (II) receive configuration information from the contract monitor (300) and configure the system (110) accordingly and, wherein, the contract monitor (300) is arranged to: (a) receive information concerning the state of the system from the system monitoring and configuration module (120); (b) monitor the state of the contract; and (c) compare the system state information to the contract state information and detect any imbalance therebetween.

14. The apparatus of claim 13, wherein the contract (310) is established between the user and the provider in a designated format for an electronic document.

15. The apparatus of claim 13 or 14, wherein the controller (340) is arranged for accessing the database (320) and comparing data from the system monitoring and configuration module (120) with requirements and obligations defined in the contract (310) and alerting one or more of the contracting parties of any discrepancy.

16. The apparatus of claim 13, 14 or 15, wherein the contract (310) comprises optional requirements relating to system parameters and the obligations required to be met to validate the provision of such optional requirements.

17. The apparatus of claim 13, 14 or 15, wherein there is further provided at a location of the provider equipment a customer maintenance module (210) which is arranged for: automatically ordering the provision of any necessary elements for supply for the required system; and delivery of the elements to a required location.

18. The apparatus of claim 17, wherein the system monitoring and configuration module (120) is arranged at the required location to set-up the elements in accordance with the contract.

19. The apparatus of any of claims 13 to 18, wherein one or more of the contracting parties is alerted whenever it is detected that there is an imbalance between requirements and obligations.

20. The apparatus of claim 20, wherein if an obligation is detected as being fulfilled, whilst the corresponding requirement is not fulfilled, the relevant party is prompted to fulfil the requirement.

21. The apparatus of claim 19 or 20, wherein if a requirement is detected as being fulfilled, whilst a corresponding obligation is unfulfilled, the relevant party is prompted to fulfil such obligation.

22. The apparatus of any of claim 13 to 21, wherein the system monitoring and configuration module (120) comprises a control module (121) and sensors (124), wherein the sensors (124) are arranged to sense information relevant to the current state of the system (110) and, under control of the control module (121), the system state information is transmitted to the contract monitor (300).

23. The apparatus of claim any of claims 13 to 22, wherein the contract monitor (300) is arranged following comparison stage (c) to alert one or more of the contracting parties to any imbalance found.

24. The apparatus of claim 23, wherein following such alert the service provider corrects such imbalance.

25. The apparatus of any of claims 13 to 24, wherein the communications interface (330) of the contract monitor is arranged for communication between it and both user and provider equipments.
